(19) Europäisches Patentamt
European Patent Office
Office européen des brevets

(11) **EP 2 990 841 A1**

(12) **EUROPEAN PATENT APPLICATION**
published in accordance with Art. 153(4) EPC

(43) Date of publication:
**02.03.2016 Bulletin 2016/09**

(21) Application number: **14789095.8**

(22) Date of filing: **13.02.2014**

(51) Int Cl.:
*G02B 5/20* (2006.01)  *G02B 26/08* (2006.01)

(86) International application number:
**PCT/KR2014/001195**

(87) International publication number:
**WO 2014/175541 (30.10.2014 Gazette 2014/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.04.2013  KR 20130045889**

(71) Applicant: **Korea Research Institute of Chemical Technology**
**Daejeon 305-343 (KR)**

(72) Inventors:
• **JIN, Seung Min**
**Sejong 339-014 (KR)**
• **YANG, Il Seung**
**Sejong 339-014 (KR)**
• **SUH, Yung Doug**
**Daejeon 305-340 (KR)**

• **NAM, Sang Hwan**
**Daejeon 305-804 (KR)**
• **JUNG, Yu Jin**
**Busan 612-846 (KR)**
• **LEE, Hae Mi**
**Daejeon 302-830 (KR)**
• **BAE, Yun Mi**
**Nonsan-si**
**Chungcheongnam-do 320-833 (KR)**
• **PARK, So Jeong**
**Seoul 156-060 (KR)**
• **KIM, Yu Sic**
**Miryang-si**
**Gyeongsangnam-do 627-863 (KR)**

(74) Representative: **Maiwald Patentanwalts GmbH**
**Elisenhof**
**Elisenstrasse 3**
**80335 München (DE)**

(54) **MONOCHROMATIZATION DEVICE CAPABLE OF SELECTING WAVELENGTH OF LIGHT BY USING BROADBAND FILTER**

(57)     Provided is a monochromatization device for easily selecting light having a specific wavelength, comprising: a first broadband filter arranged to have a first rotational angle with respect to an incident direction of light to enable a first wavelength band to pass therethrough with respect to the incident light; a second broadband filter arranged to have a second rotational angle with respect to an incident direction of light to enable a second wavelength band to pass therethrough with respect to the light passing through the first broadband filter; and a path compensation unit for adjusting a light path so that the light path passing through the second broadband filter is the same as a path of the light incident to the first broadband filter. Accordingly, the output light efficiency for the incident light is increased and the required specific wavelength can be more easily selected.

FIG. 4

**Description**

*Technical field*

The present invention relates to a monochromitization device (hereinafter "monochromator") which uses the broadband filter. Specifically, it relates to a monochromator which selectively monochromitizes the light by specially arranging the broadband filters that can select the wavelength, thereby controlling the central wavelength of the light and the wavelength range arbitrarily.

*Background Art*

As a device for spectralizing the light comprising broad wavelength area and extracting the monochromatic light, there is a monochromator which uses a diffraction grid or prism as the dispersing element. The conventional monochromator using a diffraction grid was used for the purpose of providing the light source having a selected wavelength and selectively detecting the light from the target as a detector. For example, the monochromator for providing the light source is used in a spectrophotometer, for selecting the wavelength of the light source to be the target of analysis from the light source comprising various bands. The Korean Patent Laid-Open No. 2008-0015759 discloses a monochromator system having the diffraction grid for separating the light in order to have a specific wavelength range and resolving power.

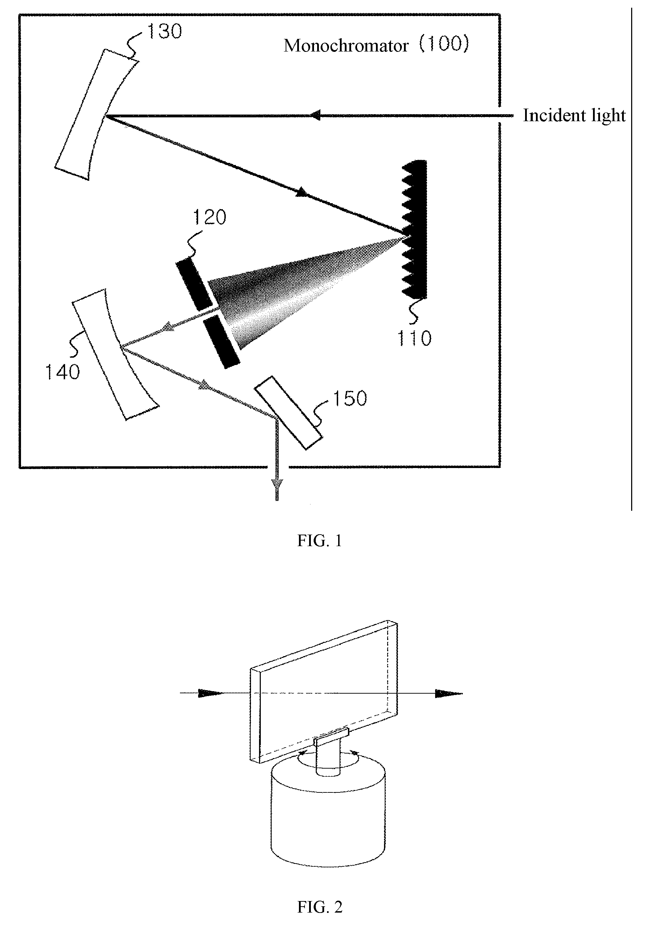

Fig. 1 illustrates a general monochromator (100) using a diffraction grid. The monochromator (100) of Fig. 1 comprises a diffraction grid (110), a slit (120) to let the light pass through restrictively, mirrors (130, 140, 150) with flat or curved surfaces to adjust the route of the light. Specifically, once the light with broad wavelength band is provided to the monochromator, the mirror with curved surface (130) changes the route of the light and the light is led to the diffraction grid (110). The diffraction grid (110) separates the wavelength of the incident light, and the slit (120) selectively passes through the desired wavelength bands in the separated wavelength bands by adjusting the position or the width, etc. of the slit. The light which passed the slit (120) passes again through the mirrors (140, 150) with flat or curved surfaces, and the light having a specific wavelength is outputted from the monochromator.

However, the conventional monochromator using a diffraction grid has a problem that in the process of the incident light is scattered by the diffraction grid or reflected or permeated by one or more of the mirrors, the efficiency of the light of the specific wavelength outputted from the device for the light incidentally irradiated to the device substantially decreases. In addition, the monochromator using a diffraction grid had a limit that it cannot be fundamentally applied to imaging methods except the scanning imaging method. Thus, there was a need in realization of a monochromator which does not substantially decreases the efficiency of the outputted light of selected wavelength with respect to the incident light, and which can be flexibly applied to various imaging methods.

*Contents of invention*

*Subject matter to be solved*

The present invention is for solving the problem of the monochromator using a diffraction grid described above. An object of the present invention is to provide a technology which allows realizing a monochromator without a diffraction grid by arranging in series one or more broadband filters that have different wavelength ranges of the light to be passed, to have an increased light efficiency and to obtain selectively the desired central wavelength and wavelength range for the incident light.

However, the subject matter to be solved of the present invention is not limited to the abovementioned objects, and within the scope not exceeding the idea and the field of the invention, various expansions may be made.

*Means for achieving the subject matter*

In order to achieve an object of the present invention, the monochromator for selecting a specific wavelength of light, comprises a first broadband filter arranged to have a first rotational angle with respect to an incident direction of light to enable an incident light to pass through a first wavelength band; a second broadband filter arranged to have a second rotational angle with respect to an incident direction of light to enable the light having passed through the first broadband filter to pass through a second wavelength band; and a path compensation means for adjusting a path of the light having passed through the second broadband filter to be identical to a path of the light having passed through the first broadband filter.

According to an embodiment, the first broadband filter, the second broadband filter and the path compensation means can be arranged in series to the incident direction of light.

According to an embodiment, a predetermined wavelength band and/or a predetermined center wavelength of the light having passed through the first broadband filter and the second broadband filter can be selected by adjusting the first rotational angle of the first broadband filter and the second rotational angle of the second broadband filter

According to an embodiment, the monochromator may further comprise one or more broad band filter having different wavelength band of light being passed therethrough according to a rotational angle arranged with respect to the incident direction of light.

According to an embodiment, the monochromator may further comprise a control means, to select the specific wavelength of the light, for determining the first wavelength band and the second wavelength band and adjusting the first rotational angle of the first broadband filter and the second rotational angle of the second broadband filter. The first rotational angle of the first broadband filter and the second rotational angle of the second broadband filter can be adjusted with an electric motor.

### *Effects*

The monochromator which selects the specific wavelength of light according to embodiments of the present invention, compared to the monochromator which uses a diffraction grid, can substantially increase the efficiency of the light outputted from the monochromator with respect to the irradiated light, and can be flexibly applied to various imaging methods other than scanning imaging method.

Moreover, the monochromator according to the embodiments of the present invention, by arranging the first broad band filter and the second broadband filter having different wavelength band of light being passed therethrough according to the angle, and by adjusting each of the first rotational angle of the first broadband filter and the second rotational angle of the second broadband filter, can output the light having the desired central wavelength and wavelength range. This has an advantage that, without replacing the broadband filter, by merely adjusting the rotational angle, the any desired wavelength can be selected, providing the user convenience at the same time saving the relatively expensive installation cost of an optical system.

However, the effect of the present invention is not limited to the above, and within the scope not exceeding the idea and the field of the invention, various expansions may be made.

### *Brief Description of Drawings*

Fig. 1 represents the conventional monochromator having a diffraction grid.

Fig. 2 represents an exemplary broadband filter used in the present invention.

Figs. 3 (a) to (d) represent exemplary results of the permeated wavelength range according to the rotational angle of the broadband filter of Fig. 2.

Fig. 4 represents the monochromator according to an embodiment of the present invention.

Fig. 5a illustrates the process of the selection of a specific wavelength according to an embodiment of the present invention.

Fig. 5b illustrates the fundamentals of using two broadband filters to select a specific wavelength according to an embodiment of the present invention.

### *Best form for carrying out of the invention*

Regarding the embodiments of the present invention in this text, particular structural and functional explanations are merely examples for the purposes of explaining the embodiment of the present invention, and the embodiments of the present invention can be carried out in various forms and it shall not be construed as being limited to the embodiments described in this text.

The present invention can have various modifications and forms, and thus specific embodiments are described in this text in detail with examples in drawings. However, this is not purported to limit the present invention to a specific disclosed form, but it shall be understood to include all modifications, equivalents and substitutes within the idea and the technological scope of the present invention.

The terminology used in the present application is used for the purposes of explaining the specific embodiment only, and it is not intended to limit the present invention. Singular expressions shall include the plural expressions unless expressly meant otherwise in context. In the present application, it shall be understood that the terms such as "comprise/include" or "have" etc., are intended to designate the presence of the feature, number, step, movement, component, part or their combination, and not excluding the presence or possibility of addition of one or more of other features or numbers, steps, movements, components, parts or their combinations beforehand.

Unless defined otherwise, including the technical or scientific terms, all terms used here mean the same as understood by a skilled person in the art to which the present invention pertains. The terms that are used generally as defined in a dictionary, shall be construed as the meaning consistent with the meaning in the context of the related technology, and unless the present application expressly defines otherwise, they shall not be construed as having ideal or excessively typical meaning.

In this text, the preferable embodiment of the present invention will be explained in more detail with reference to the attached drawings. For the identical components on the drawings, identical reference numerals shall be used, and any overlapping description of the identical component shall be omitted.

Fig. 2 represents an exemplary broadband filter used in the present invention. As an embodiment, the broadband filter used in the present invention may comprise filter selectively passing through the light incidentally irradiated, and rotation controlling portion having the rotational axis which supports the broadband filter and adjusts the rotation of the filter. The rotational axis can rotate 360°, and can be rotated manually or by power such as electric motor.

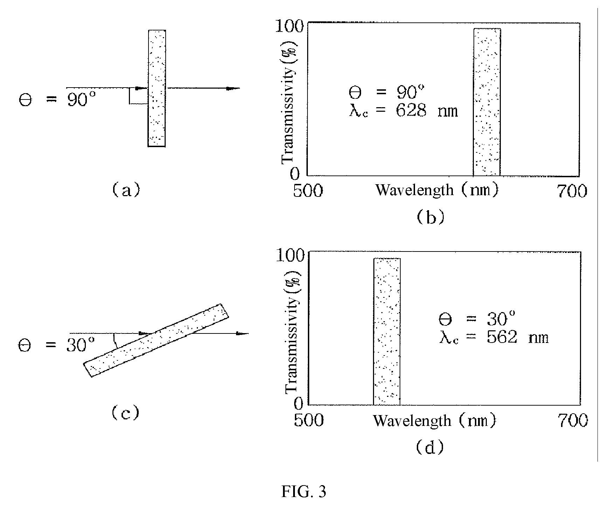

Figs. 3 (a) to (d) represent exemplary results of the passed wavelength range according to the rotational angle of the broadband filter of Fig. 2. Specifically, Fig. 3(a) illustrates the case in which the light is passed with the rotational angle of the broadband filter arranged in 90°, and the exemplary result of the passed light is illustrated in Fig. 3(b). Referring to Fig. 3(b), where the light is passed with the rotational angle of the broadband filter arranged in 90°, it can be seen that only the light with central wavelength of 628nm and a bandwidth of certain width is passed. Moreover, Fig. 3(c) is a case in which the light is passed with the rotational angle of the broadband filter arranged in 30°, as shown in Fig. 3(d), it can be seen that only the light with central wavelength of 562nm and a bandwidth of certain width is passed. As such, the broadband filter can be a band passing filter having different central wavelength according to the rotational angle. Moreover, a band passing filter having different central wavelength and bandwidth according to the rotational angle can also be used.

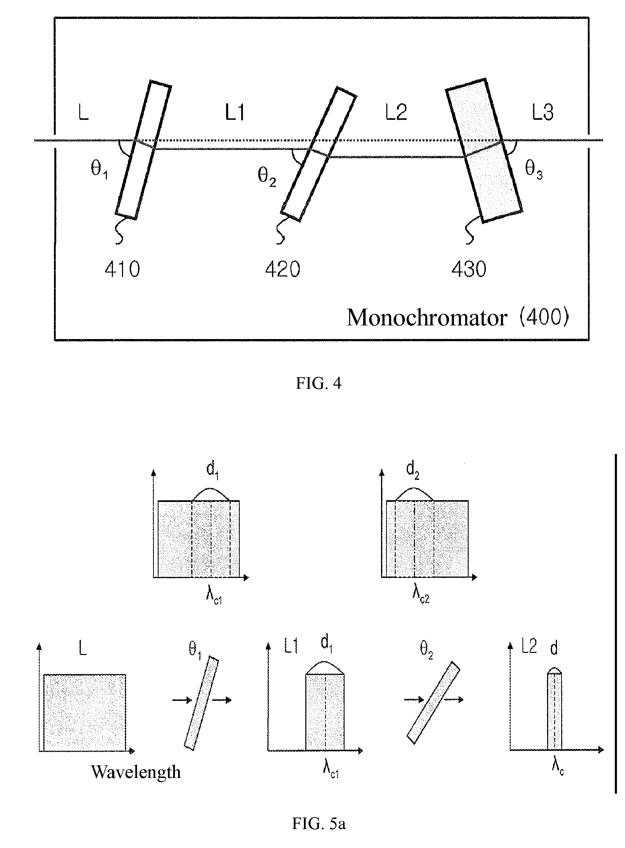

An embodiment of a monochromator, using a broadband filter having different wavelength band of light being passed therethrough according to the rotational angle, is illustrated in Fig. 4. The monochromator (400) of the present invention comprises the first broadband filter (410), the second broadband filter (420) and the compensation unit (430). The first broadband filter (410) is arranged to have the first rotational angle ($\theta_1$) with respect to the incident direction of light. The incident light L passes through the first broadband filter (410) and becomes the light L1 having the predetermined bandwidth according to the first rotation angle ($\theta_1$). The second broadband filter (420) is arranged to have the second rotational angle ($\theta_2$) with respect to the incident direction of light. The second broadband filter (420) lets the wavelength part corresponding to the predetermined bandwidth according to the second rotational angle ($\theta_2$) be passed from the incident light L1. Thus, the incident light L passes through the first broadband filter and the second broadband filter in turn, so that it becomes the light L2 which only has the wavelength overlapping the wavelength bandwidth passed through the first broadband filter with the wavelength bandwidth passed through the second broadband filter.

Meanwhile, when the light passes through the broadband filters, the route of the light varies depending on the thickness of the filter, angle, incident angle, etc. For example, L1 and L2 that passed through the first broadband filter and the second broadband filter, respectively, have difference in route compared to the incident light L as illustrated in Fig. 4. As such, if the route of the light varies depending on the thickness, number and angle, etc. of the broadband filter, it can be a significant restriction on using various combinations of the broadband filters for selecting various scopes of wavelength. Thus, the monochromator (400) of the present invention comprises the compensation unit (430) and thus adjusts the route of the light so that the change in the route of the light incurred by passing through the first broadband filter and the second broadband filter is identical to that in the route of the light before passing through the broadband filters. Thus, the light L3 which passed through the compensation unit (430) has only the wavelength passed through both the first broadband filter and the second broadband filter, at the same time has the same light route as the incident light L which did not pass through the broadband filters.

As an embodiment, in the monochromator, the first broadband filter, the second broadband filter and the compensation unit can be arranged in series, and one or more of the broadband filter can be added. It is not illustrated in the drawings, however, the first broadband filter, the second broadband filter and the compensation unit are connected to the controller apparatus such as a computer comprising a memory and a processor, and can calculate the parameters of the compensation unit for adjusting the light route and the rotational angles of the broadband filters for deriving the desired wavelength bandwidth in the processor. The calculated value can be stored in the memory.

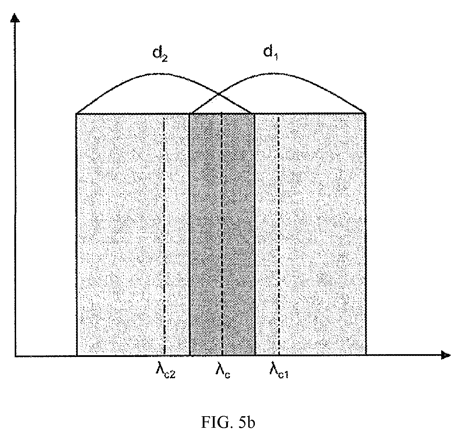

Fig. 5a illustrates the process of the selection of a specific wavelength according to an embodiment of the present invention. The light L with wavelength of broad bandwidth is provided with the monochromator. The first broadband filter works as the first bandwidth passing filter having the central wavelength $\lambda_{c1}$ and bandwidth $d_1$ when it is arranged to have the rotational angle $\theta_1$. The light L1 is the result of the light L passing the first broadband filter with the rotational angle $\theta_1$, and it has the central wavelength $\lambda_{c1}$ and bandwidth $d_1$. The second broadband filter works as the second bandwidth passing filter having the central wavelength $\lambda_{c2}$ and bandwidth $d_2$ when it is arranged to have the rotational angle $\theta_2$. Only the part of wavelength of the light L1 corresponding to the wavelength band which the second bandwidth passing filter passes and becomes the light L2. In this regard, Fig. 5b illustrates the fundamentals of selecting a specific wavelength by letting the light pass the first broadband filter with the central wavelength $\lambda_{c1}$ and bandwidth $d_1$, and the second broadband filter with the central wavelength $\lambda_{c2}$ and bandwidth $d_2$. By such fundamentals, light L2 as a result has the central wavelength $\lambda_c$ and bandwidth d, and here, each of $\lambda_c$ and d is derived by the following equation 1 and equation 2.

Equation 1

$$\lambda_c = \frac{1}{2}(\lambda_{c1} + \lambda_{c2}) - |d_1 - d_2|$$

Equation 2

$$d = \frac{1}{2}(d_1 + d_2) - \frac{1}{4}|\lambda_{c1} - \lambda_{c2}|$$

The monochromator of the present invention, by the fundamentals as above, can freely select the desired wavelength by adjusting the rotational angles of the broadband filters and varying the central wavelength and the bandwidth of the wavelength bandwidth being passed.

As above, the present invention is described with reference to a preferred embodiment, but a skilled person in the art would understand that the present invention may be modified and changed variously within the scope not exceeding the idea and the field of the present invention described in the below claims.

**Industrial availability**

According to the present invention, by realizing a monochromator without a diffraction grid by arranging in series one or more broadband filters that have different wavelength ranges of the light to be passed, it is made possible to have an increased light efficiency and to obtain selectively the desired central wavelength and wavelength range for the incident light.

**Claims**

1. A monochromatization device for selecting a specific wavelength of light, comprising:

   a first broadband filter arranged to have a first rotational angle with respect to an incident direction of light to enable an incident light to pass through a first wavelength band;
   a second broadband filter arranged to have a second rotational angle with respect to an incident direction of light to enable the light having passed through the first broadband filter to pass through a second wavelength band; and
   a path compensation means for adjusting a path of the light having passed through the second broadband filter to be identical to a path of the light having passed through the first broadband filter.

2. The monochromatization device of claim 1, wherein the first broadband filter, the second broadband filter and the path compensation means are arranged in series with respect to the incident direction of light.

3. The monochromatization device of claim 1, wherein at least one of a predetermined wavelength band and a predetermined center wavelength of the light having passed through the first broadband filter and the second broadband filter is selected by adjusting the first rotational angle of the first broadband filter and the second rotational angle of the second broadband filter.

4. The monochromatization device of any of claims 1 to 3, further comprising one or more broadband filter having different wavelength band of light being passed therethrough according to a rotational angle arranged with respect to the incident direction of light.

5. The monochromatization device of any of claims 1 to 3, further comprising a control means, to select the specific wavelength of the light, for determining the first wavelength band and the second wavelength band and adjusting the first rotational angle of the first broadband filter and the second rotational angle of the second broadband filter.

6. The monochromatization device of Claim 5, wherein the first rotational angle of the first broadband filter and the second rotational angle of the second broadband filter are adjusted with an electric motor.

FIG. 1

FIG. 2

FIG. 3

FIG. 4

FIG. 5a

FIG. 5b

## INTERNATIONAL SEARCH REPORT

| International application No. |
|---|
| **PCT/KR2014/001195** |

**A. CLASSIFICATION OF SUBJECT MATTER**

*G02B 5/20(2006.01)i, G02B 26/08(2006.01)i*

According to International Patent Classification (IPC) or to both national classification and IPC

**B. FIELDS SEARCHED**

Minimum documentation searched (classification system followed by classification symbols)

G02B 5/20; H01S 3/10; G02B 26/08; H01S 5/30; H01S 5/22; G02F 1/37; G02B 7/198; G11B 7/135; G02F 2/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: optics, wavelength, conversion, control, angle, compensation

**C. DOCUMENTS CONSIDERED TO BE RELEVANT**

| Category* | Citation of document, with indication, where appropriate, of the relevant passages | Relevant to claim No. |
|---|---|---|
| Y | KR 10-2008-0010922 A (SAMSUNG ELECTRO-MECHANICS CO., LTD.) 31 January 2008 See paragraphs [0030], [0040]-[0052], claims 1, 7, 16 and figure 2. | 1-6 |
| Y | KR 10-2008-0013635 A (SAMSUNG ELECTRO-MECHANICS CO., LTD.) 13 February 2008 See paragraph [0034], claims 1, 5 and figure 2. | 1-6 |
| A | JP 2002-319176 A (SONY CORP.) 31 October 2002 See paragraph [0022], claim 1 and figures 1-3. | 1-6 |
| A | KR 10-2006-0135788 A (PHOTO-PHYSICS LABORATORY INC. et al.) 29 December 2006 See claims 1, 5-6 and figure 1. | 1-6 |
| A | JP 2002-214511 A (FUJI PHOTO FILM CO., LTD.) 31 July 2002 See paragraphs [0040]-[0041], claims 1, 3 and figures 1-2. | 1-6 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 MAY 2014 (20.05.2014) | **21 MAY 2014 (21.05.2014)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/001195**

| Patent document cited in search report | Publication date | Patent family member | Publication date |
|---|---|---|---|
| KR 10-2008-0010922 A | 31/01/2008 | KR 10-0809273 B1 | 03/03/2008 |
| KR 10-2008-0013635 A | 13/02/2008 | JP 2008-040476 A | 21/02/2008 |
| | | JP 2010-061169 A | 18/03/2010 |
| | | JP 4828631 B2 | 30/11/2011 |
| | | US 2008-0037600 A1 | 14/02/2008 |
| | | US 7447244 B2 | 04/11/2008 |
| JP 2002-319176 A | 31/10/2002 | NONE | |
| KR 10-2006-0135788 A | 29/12/2006 | JP 2005-221807 A | 18/08/2005 |
| | | JP 4806781 B2 | 02/11/2011 |
| | | US 2008-0175282 A1 | 24/07/2008 |
| | | US 7457030 B2 | 25/11/2008 |
| | | WO 2005-076066 A1 | 18/08/2005 |
| JP 2002-214511 A | 31/07/2002 | JP 4303427 B2 | 29/07/2009 |

Form PCT/ISA/210 (patent family annex) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20080015759